# EUROPÄISCHE PATENTSCHRIFT

(11) **EP 2 460 896 B1**
(45) Veröffentlichungstag und Bekanntmachung des Hinweises auf die Patenterteilung: **24.01.2018**
(21) Anmeldenummer: 11191711.8
(22) Anmeldetag: 02.12.2011
(51) Int. Cl.: C21D 1/607, C21D 9/00, C23C 22/70, C23C 22/72, F16D 13/74

(54) **Verfahren zum Herstellen eines Reibelementes**
Method for producing a friction element
Procédé de fabrication d'un élément de friction

(30) Priorität: 03.12.2010 AT 20152010
(43) Veröffentlichungstag der Anmeldung: 06.06.2012
(73) Patentinhaber: Miba Frictec GmbH, 4661 Roitham (AT)
(72) Erfinder: Hartner, Gerhard, 4654 Bad Wimsbach (AT); Tsioptsias, Zisis, 4810 Gmunden (AT)
(74) Vertreter: Burger, Hannes

(56) Entgegenhaltungen:
- EP-A1- 0 497 663
- EP-A1- 1 396 553
- WO-A2-2009/132369
- DE-A1-102007 027 933
- DE-B- 1 012 946
- US-A- 5 346 560

## Beschreibung

Die Erfindung betrifft ein Reibelement umfassend einen metallischen Grundkörper, der mehrere Oberflächen aufweist, wobei zumindest eine der Oberflächen zumindest teilweise in einem Salzbad, das zumindest ein Salz einer anorganischen Säure enthält, salzbadgehärtet ist, wobei die salzbadgehärtete Oberfläche zumindest teilweise oxidiert ist, wobei mehrere unterschiedliche Oxide an der Oberfläche jeweils in diskreten, zumindest teilweise kraterförmigen Bereichen ausgebildet sind, eine Reibbaugruppe umfassend zumindest ein erstes Reibelement und zumindest ein zweites Reibelement, wobei die beiden Reibelemente in Reibschluss miteinander verbringbar angeordnet sind, sowie die Verwendung des Reibelementes.

Derartige Reibelemente werden beispielsweise in Lamellenkupplungen als so genannte Gegenlamelle verwendet. Die Lamellenkupplung umfasst üblicherweise ein eine Mehrzahl von Lamellen. Dabei ist eine erste Gruppe auf einem Lamellenträger dreh- und verschiebefest angeordnet, und eine zweite auf einer Nabe. Die beiden Gruppen sind in axialer Richtung relativ zueinander verschiebbar und dabei paarweise in Eingriff und außer Eingriff bringbar.

Die Reiblamellen sind im allgemeinen ringförmig ausgebildet und sandwichartig aufgebaut. Sie umfassen ein Trägerblech, das beispielsweise aus Stahl besteht und das auf seinen Ringflächen einen Reibbelag trägt. Dieser besteht im üblicherweise aus einer Faserschicht, die z.B. aus Papier oder aus einem papierartigen Material hergestellt ist und mit einem organischen Harz, dass mit Reibpartikel versehen ist, getränkt ist. Die Gegenlamellen sind zum Unterschied dazu aus einem einzigen Stück aus einem Reibmaterial hergestellt. Eine derartige Gegenlamelle ist z.B. in der WO 97/32678 A1 beschrieben.

Bei den genannten Lamellenpaketen spielt die Schmierung der einzelnen Bauteile eine wichtige Rolle. Insbesondere muß dafür gesorgt werden, dass Schmieröl zu den Reibflächen der Lamellen gelangt. Man spricht daher auch von so genannten nasslaufenden Anwendungen der Lamellen. Der Reibbelag weist dazu üblicherweise einen porösen Aufbau auf, wodurch eine gewisse Ölspeicherung erreicht wird. Das gespeicherte Öl wird während des Reibschlusses der Lamelle mit der Gegenlamelle und der damit erfolgenden Kompression wieder abgegeben. Um die Ölabgabe zu verbessern weist der Reibbelag normalerweise zur Fürhung des Schmieröls Nuten auf. Das Schmieröl übernimmt aber auch die Funktion der Kühlung der Reibflächen, indem das Öl die beim Reibschluss entstehende Reibwärme aufnimmt und über die Nuten abführt.

Gegenlamellen weisen überlicherweise keine derartigen Nuten auf, wodurch diese Gegenlamellen einer höheren Temperaturbelastung ausgesetzt sind. Dabei kann der Fall eintreten, dass aufgrund der Temperturbelastung die Festigkeit der Gegenlamelle reduziert wird, insbesondere wenn diese aus einer Aluminiumlegierung besteht. Der Einsatz von Aluminiumlegierungen ist aber geboten, da von der Kraftfahrzeugindustrie eine Gewichtsreduktion der einzelnen Aggregate gefordert wird.

Um diesem Problem der Überhitzung der Gegenlamelle zu begegnen wird in der DE 199 06 980 A1 vorgeschlagen, den Oberflächen der Lamellen eine Struktur zu verleihen, sodass Öltaschen gebildet werden. Die Öltaschen sorgen dafür, dass die gefährdete Reibfläche auch dann noch mit einem Restschmierölvorrat behaftet ist, wenn die aus ihrer achssenkrechten Position ausgelenkte Nachbarlamelle mit ihrer Endkante an der gefährdeten Reibfläche schleifend anliegt oder Zentrifugalkräfte versuchen, den Ölfilm abzuschleudern. Die Struktur der Oberfläche braucht dabei nur eine minimale zu sein, mit minimalen Erhöhungen und Vertiefungen. Die Struktur muss nur derart gestaltet sein, dass ein wirksamer Ölvorrat an bzw. in der betreffenden Reibfläche noch vorhanden ist. Die Struktur der Oberfläche und damit die genannten Öltaschen können mikroskopisch klein sein. Sie können aber auch im Makro-Bereich liegen. Sie können das Aussehen eines Gewebeabdruckes haben. Sie können auf unterschiedliche Weise erzeugt werden, beispielsweise durch Laserbehandlung der LamellenOberflächen oder auch eine chemische Behandlung, beispielsweise das Anwenden eines Ätzverfahrens bei Sinterbelägen.

Es ist weiters im Stand der Technik bekannt, die Oberflächen von Gegenlamellen, insbesondere der Gegenlamellen, die keinen gesonderten Reibbeläge tragen, zu härten. Eines der angewandten Härteverfahren ist dabei das Salzbadhärten.

Aus der DE 10 12 946 A1 ist ein Verfahren zur Oberflächenbehandlung von Kupplungslamellen aus Stahl bekannt, bei dem die Härtung erst nach dem mechanischen Fertigbearbeiten der Lamellenoberfläche unter Anwendung von Stickstoff abgebenden Mitteln erfolgt. Das Abschrecken der Lamellen wird in einem Salzbad vorgenommen, welches auf Oberfläche der Lamellen eine Oxidschicht erzeugt, beispielsweise in einer Schmelze vom Natrium- und Kaliumsalpeter.

Die US 5,346,560 A beschreibt ein Behandlungsverfahren für Teile aus eisenhaltigem Metall zum gleichzeitigen Verbessern ihres Widerstandes gegen Korrosion und ihrer Reibungseigenschaften, wobei die Teile nitriert und oxidiert werden und einen finalen Überzug erhalten, wobei die Nitrierung gefolgt von der Oxidation zur Bildung einer Schicht führt, welche eine tiefe kompakte Unterschicht und eine oberflächliche poröse Unterschicht umfasst, und die nitrierten und dann oxidierten Teile mit einem hydrophoben Wachs getränkt werden, wobei das Wachs eine kohlenstoffhaltige organische Verbindung ist, mit einem hohen Molekulargewicht in einem Bereich zwischen 500 und 10000, einer Oberflächenspannung im flüssigen Zustand in einem Bereich zwischen 10 und 73 mN/m, wobei der Kontaktwinkel zwischen der festen Phase der oberflächlichen Schicht und dem Wachs im flüssigen Zustand in einem Bereich zwischen 0 und 75° liegt. Die Oxidation erfolgt in einem geschmolzenen Salzbad bei einer Temperatur zwischen 350 °C und 450 °C.

Die WO 2009/132369 A2 beschreibt ein Verfahren zur Ausrüstung einer Ölkupplung gegen den, insbesondere infolge Alterung des Öls und molekularer Veränderung von dessen Additiven, auftretenden "stick-slip"-Effekt, wobei zumindest eine der jeweils anderen Scheibe zugewandte metallische Oberfläche einer Scheibe direkt mit einer dünnen Drehmomentübertragungs-Schicht aus zumindest einem dort mittels Abscheidung und/oder Konversion aufgebrachten, festhaftenden, zumindest komplex-chemisch an die metallische Oberfläche gebundenen Niederschlags auf Basis mindestens eines Phosphates, Molybdates, Titanates, Zirkonates, Vanadates, Wolframates, Oxides, Hydroxides und/oder (basischen) Carbonates eines Metalls der zweiten Neben- oder Hauptgruppe des Periodensystems, des Eisens, Mangans und/oder Cers versehen wird, indem die zu behandelnde metallische bzw. zumindest oberflächlich metallische Scheibe vorzugsweise bei einer Temperatur zwischen 0 °C und 100 °C für kurze Zeit, vorzugsweise für 0,3 bis 30 min. in eine, vorzugsweise wässerige, Lösung zumindest eines Phosphates, Molybdates, Wolframates, Titanates, Zirkonates, Vanadates, Oxides, Hydroxides und/oder (basischen) Carbonates eines Alkalimetalls oder des Ammoniums, gegebenenfalls unter Rühren, eingebracht wird.

Die DE 10 2007 027933 A1 beschreibt ein Verfahren zum Nitrocarburieren von Bremsrotoren eines Kraftfahrzeugs, umfassend die Schritte: Gießen eines eisenhaltigen Bremsrotors mit sich gegenseitig gegenüberliegenden ersten und zweiten Rotorwangen; Breitstellen eines nitrocarburierenden Salzbades; Bereitstellen eines oxidierenden Salzbades; Vorerhitzen des Bremsrotors auf eine erste vorbestimmte Temperatur; Eintauchen des Bremsrotors in das nitrocarburierende Salzbad, wobei sich das nitrocarburierende Salzbad bei einer zweiten vorbestimmten Temperatur befindet, und wobei der Bremsrotor derart in dem nitrocarburierenden Salzbad platziert wird, dass sich alle Flächen der ersten und zweiten Rotorwangen in Kontakt mit dem nitrocarburierenden Salzbad befinden; Entfernen des Bremsrotors aus dem nitrocarburierenden Salzbad nach einer ersten vorbestimmten Verweilzeit; Eintauchen des Bremsrotors in das oxidierende Salzbad, wobei sich das oxidierende Salzbad bei einer dritten vorbestimmten Temperatur befindet, und wobei der Bremsrotor derart in dem oxidierenden Salzbad platziert wird, dass sich alle Flächen der ersten und zweiten Rotorwangen in Kontakt mit dem oxidierenden Salzbad befinden; Entfernen des Bremsrotors aus dem oxidierenden Salzbad nach einer zweiten vorbestimmten Verweilzeit und Abkühlen des Bremsrotors auf im Wesentlichen Raumtemperatur.

Die Aufgabe vorliegender Erfindung bestand darin, ein Reibelement mit verbesserter thermischer Beständigkeit zu schaffen.

Diese Aufgabe wird durch das genannte Reibelement gelöst, bei dem die kraterförmigen Bereiche einen maximalen Durchmesser in Draufsicht aufweisen, der ausgewählt ist aus einem Bereich mit einer unteren Grenze von 50 µm und einer oberen Grenze von 300 µm, und die salzbadgehärtete Oberfläche Salzrückstände aus dem Salzbad aufweist, durch eine das erfindungsgemäße Reibelement aufweisende Reibbaugruppe, sowie durch die Verwendung eines salzbadgehärteten Reibelementes als Gegenlamelle in einer nasslaufenden Reibbaugruppe mit zumindest einem weiteren Reibelement, wobei das weitere Reibelement einen organischen Reibbelag auf einem Trägerelement aufweist.

Von Vorteil ist dabei, dass durch die Salzbadhärtung eine strukturierte Oberfläche entsteht, die ähnlich wie in der DE 199 06 980 A1 als Ölspeicher wirkt, wobei jedoch durch die bei der Salzbadhärtung entstehenden, oberflächlich ausgebildeten Substanzen, insbesondere Oxide, eine adhäsive Anbindung des Schmieröls bzw. von Additiven des Schmieröls, die zur Verbesserung der triboloischen Eigenschaften dem Schmieröl zugesetzt werden, erfolgt, also das Schmieröl bzw. seine Additive über einen längeren Zeitraum auch in der eingerückten Stellung der Reibflächen der Kupplung zur Verfügung stehen. Als zusätzlicher Effekt tritt ein, dass die Herstellung des Reibelementes kostengünstiger ist, da bisher üblicherweise nach der Salzbadhärtung durchgeführte anschließende Bearbeitungsschritt, wie z.B. das Auswaschen der Rückstände des Salzbades oder das Polieren der Oberfläche des Reibelementes zur Entfernung der gebildeten Oxide, entfallen. Durch die Anlagerung von Additiven des Schmieröls bzw. von Ölmolekülen wird zudem eine Verbesserung des Reibwertes, des Reibwertverlaufes und des Geräusch- bzw. Schwingungsverhaltens sowie eine Reduktion des Verschleißes erreicht, speziell bei Gegenlamellen aus Aluminium bzw. Aluminiumlegierungen. Durch die zumindest teilweise Ausbildung einer Oxidschicht aus unterschiedlichen Oxiden wird der Oberfläche des Reibelementes im Bereich der Reibfläche eine unterschiedliche Polarität verliehen, sodass die adhäsive Anbindung von Ölmolekülen und Öladditiven, die üblicherweise ebenfalls eine unterschiedliche Polarität aufweisen, verbessert. Es kann mit diesem Reibelement also der Verschleiß einer Reiblamelle mit aufgebrachtem Reibbelag reduziert werden.

Bevorzugt wird ein Salzbad verwendet, dass zumindest ein Salz einer anorganischen Säure enthält, insbesondere ein Salz ausgewählt ist aus einer Gruppe umfassend oder bestehend aus Nitrate, Nitrite, Hydrogennitrate, Chloride, Carbonate, Cyanide, sodass die salzbadgehärtete Oberfläche derartige Salzrückstände aus dem Salzbad aufweist. Es handelt sich dabei aufgrund der Ionenbindung um sehr polare Salze, wodurch die adhäsive Anbindung der ebenfalls polaren Additiva, die dem Schmieröl zur Verbesserung der tribologischen Eigenschaften zugesetzt werden, deutlich verbessert werden kann.

Vorzugsweise wird die Salzbadhärtung bei einer Temperatur durchgeführt wird, die ausgewählt ist aus einem Bereich mit einer unteren Grenze von 150 °C und einer oberen Grenze von 450 °C, da in diesem Temperaturintervall die rasche Bildung der oxidischen Verbindungen an der Oberfläche des Grundkörpers erreicht wird, woraus eine Reduktion der Verfahrenszeit und damit auch eine Reduktion der Herstellkosten des Reibelementes resultiert. Darüber hinaus wurde beobachtet, dass durch die Härtung in diesem Temperaturintervall die sich bildenden einzelnen Metalloxide auf diskrete Bereiche beschränken, wobei angemerkt sei, dass die gesamte Reibfläche des Reibelementes nach dem Salzbadhärten mit Oxiden bedeckt ist, die eine Größe aufweisen, die zur Ausbildung von Schmiermittelbereichen von Vorteil sind, insbesondere auch in Hinblick auf eine Geräuschreduktion des gesamten Lamellenpaketes, also der Reibbaugruppe. Diese diskreten Bereiche weisen dabei einen maximalen Durchmesser in Draufsicht auf, der ausgewählt ist aus einem Bereich mit einer unteren Grenze von 50 µm und einer oberen Grenze von 300 µm.

Diese diskreten Bereich sind kraterförmig ausgebildet, wodurch die Menge an Schmiermittel bzw. Schmitteladditiven, die darin gespeichert werden kann, erhöht werden kann.

Aus den selben Gründen kann alternativ oder zusätzlich dazu der Grundkörper vor dem Salzbadhärten erhitzt werden, insbesondere, auf eine Temperatur, die ausgewählt ist aus einem Bereich mit einer unteren Grenze von 200 °C und einer oberen Grenze von 600 °C.

Wie bereits voranstehend erwähnt werden vorzugsweise Reibelemente aus einem Stahl oder Aluminium oder einer Aluminiumlegierung hergestellt.

Gemäß einer Ausführungsvariante des Reibelementes ist vorgesehen, dass die Oxide zumindest teilweise in mehreren Schichten angeordnet sind, wodurch ebenfalls das Speicherverhalten der Reibfläche für Ölmoleküle und Schmiermitteladditive verbessert werden kann.

Bevorzugt wird das erfindungsgemäße Reibelementes in einer Motorradkupplung verwendet, die aufgrund des verringerten Bauraums der Kupplung und durch die Belastung aufgrund der hochdrehenden Motoren einer erhöhten Temperaturbelastung ausgesetzt ist.

Zum besseren Verständnis der Erfindung wird diese anhand der nachfolgenden Figuren näher erläutert.

Es zeigen jeweils in schematisch vereinfachter Darstellung:
- Fig. 1: einen Ausschnitt aus einem Lamellenpaket in Seitenansicht;
- Fig. 2 bis 4: verschiedene Abbildungen der Reibfläche eines Reibelementes;
- Fig. 5: ein Diagramm zum Verlauf des Reibungskoeffizienten in Abhängigkeit von der Anzahl der Schaltzyklen;
- Fig. 6: ein Diagramm zum NVH-Verhalten,
- Fig. 7: ein Diagramm zum Verschleiß einer Reiblammelle die in einem Reibpacket mit einem erfindungsgemäßen Reibelement als Gegenlamelle verwendet wurde.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

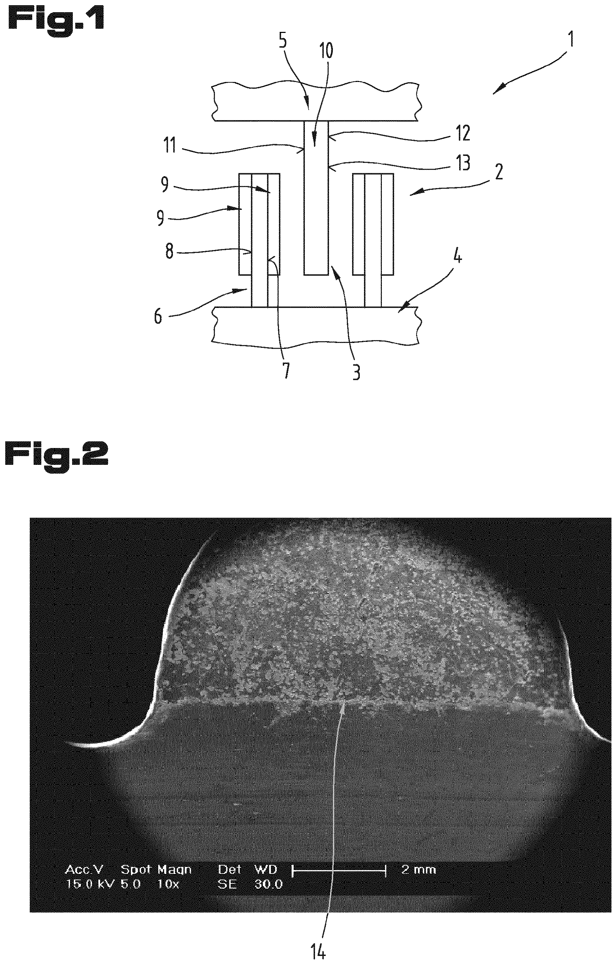

Fig. 1 zeigt einen Ausschnitt aus einer Reibbaugruppe 1 einer Lamellenkupplung in Seitenansicht. Diese Reibbaugruppe 1 umfasst zumindest ein erstes Reibelement 2 und zumindest ein zweites Reibelement 3. Das zumindest eine erste Reibelement 2 ist auf einer Welle 4 anordnet und mit dieser drehfest verbunden, das zumindest eine zweite Reibelement 3 ist auf einem Zapfen 5 angeordnet und mit diesem drehfest verbunden. Der Zapfen 5 ist mit einer weiteren, nicht dargestellten Welle drehfest verbunden. Die Welle 4 und der Zapfen 4 sind in axialer Richtung relativ zueinander verstellbar, sodass die Reibelemente 2, 3 in Reibschluss miteinander gelangen.

Die Anzahl der dargestellten Reibelemente 2, 3 ist nicht beschränkend zu sehen. Vielmehr richtet sich die Anzahl der Reibelemente 2, 3, d.h. der Reiblamellen, nach der Reibleistung, die gewünscht ist. Beispielsweise können pro Lamellenpaket drei, vier, fünf, sechs, sieben, acht, neun, zehn bis zwanzig, etc. Reibelemente 2 bzw. 3 miteinander zu einer Reibbaugruppe kombiniert sein.

Das oder die Reibelement(e) 2, d.h. die Reiblamellen, können dem Stand der Technik entsprechend ausgeführt sein. Sie umfassen bzw. bestehen z.B. aus einem Trägerelement 6, das insbesondere durch ein Metallelement, beispielsweise einem Stahlring, gebildet ist, der auf zumindest einer Oberfläche 7, bevorzugt auch auf einer dieser Oberfläche 7 in axialer Richtung gegenüberliegenden Oberfläche 8 mit (jeweils) einem Reibbelag 9 versehen und damit verbunden ist. Der Reibbelag 9 bzw. die Reibbeläge 9 können aus einem organischen Harz bestehen, in dem Reibpartikel bzw. reibungsmodifizierende Partikel und gegebenenfalls Fasern und Hartstoffe enthalten sind und das von einer gewobenen oder ungewobenen Faserschicht zumindest teilweise aufgenommen ist. Da derartige Ausführungen von Reibelementen 2 aus dem Stand der Technik bekannt sind, sei dazu an die einschlägige Literatur verwiesen.

Die Reibelemente 3, die in der Fachsprache auch als Gegenlamellen bezeichnet werden, sind hingegen nur als Metallelement ohne Reibbelag ausgeführt. Dabei weist ein metallischer Grundkörper 10 zumindest auf einer Oberfläche 11, bevorzugt auch auf einer dieser Oberfläche 11 in axialer Richtung gegenüberliegenden Oberfläche 12, eine Reibfläche 13 auf, die vorzugsweise so groß ist wie die jeweilige, an dieser Reibfläche 13 in eingerücktem Zustand der Lamellenpakete im Reibschluss anliegende Oberfläche des Reibbelages 9.

Der Grundkörper 10 des Reibelementes 3 kann entweder aus einem Sinterwerkstoff oder bevorzugt aus einem Vollmaterial bestehen, wobei in letzterem Fall der Grundkörper 10 aus einem entsprechenden plattenförmigen Rohmaterial geschnitten oder gestanzt wird, allerdings auch ein Gussverfahren prinzipiell möglich ist. Bevorzugt besteht der Grundkörper 10 aus einem Stahl bzw. einer Stahllegierung oder aus Aluminium bzw. einer Aluminiumlegierung. Prinzipiell sind aber auch andere Werkstoffe, die der Salzbadhärtung zugänglich sind, einsetzbar.

Bevorzugte werden die Reibelemente 3, also die Gegenlamellen, in Kupplungen, insbesondere Motorradkupplungen verwendet. Prinzipiell sind diese Reibelemente 3 auch in anderen Reibbaugruppen, wie z.B. Einfach- und Mehrfach-Synchronisationen, ungeregelte und geregelte Verteilergetriebe, Bremsen, Differenzialsperren, Torque Vectoring Anwendungen, etc. als Gegenlamellen einsetzbar.

Das Reibelement 3 ist für so genannte nasslaufende Anwendungen, also Anwendungen bei denen dieses mit einem Schmier- und Kühlmittel, beispielsweise einem, insbesondere synthetischen, Öl, benetzt wird. Vom Grundtyp her sind derartige Reiblamellen aus dem Stand der Technik mit unterschiedlichsten geometrischen Formen, die sich nach dem jeweiligen Anwendungsfall richten, bekannt. Da dies dem Fachmann bekannt ist, sei dazu an die einschlägige Literatur verwiesen.

Es ist vorgesehen, dass der Grundkörper 10 der Reibelemente 3 zumindest im Bereich der Reibfläche(n) 13 salzbadgehärtet wird, das den letzten Bearbeitungsschritt der Herstellung des Reibelementes 3 - mit Ausnahme der Qualitätskontrolle und Verpackung - im erfindungsgemäßen Verfahren bildet. Dazu wird dieser Grundkörper 10 nach der prinzipiellen Formgebung und gegebenenfalls Entgratung bzw. Entfettung, in ein Salzbad getaucht.

Das Salzbad kann prinzipiell entsprechend dem Stand der Technik zur Salzbadhärtung zusammengesetzt sein. Vorzugsweise enthält das Salzbad zumindest ein Salz einer anorganischen Säure, insbesondere ein Salz, beispielsweise ein Alkalisalz oder Erdalkalisalz, ausgewählt ist aus einer Gruppe umfassend oder bestehend aus Nitrate, Hydrogennitrate, Nitrite, Chloride, Carbonate, Cyanide.

Beispielsweise kann das Salzbad entsprechend den folgenden Angaben zusammengesetzt sein bzw. diese Komponenten umfassen:

### Beispiel 1:

25 Gew.-% bis 35 Gew.-% Bariumchlorid
35 Gew.-% bis 45 Gew.-% Kaliumchlorid
15 Gew.-% bis 25 Gew.-% Natriumchlorid
5 Gew.-% bis 15 Gew.-% Lithiumchlorid

### Beispiel 2:

60 Gew.-% Bariumchlorid
10 Gew.-% Natriumcyanid
30 Gew.-% Natriumcarbonat

### Beispiel 3

55 Gew.-% Bariumchlorid
15 Gew.-% Kaliumcyanid
30 Gew.-% Natriumcarbonat

### Insbesondere besteht das Salzbad aus Nitraten

Für die Salzbadhärtung wird das Salzbad auf eine Temperatur erhitzt, bei der die Salze geschmolzen sind. Vorzugsweise wird jedoch eine Temperatur gewählt, die ausgewählt ist aus einem Bereich mit einer unteren Grenze von 150 °C, insbesondere 200 °C, und einer oberen Grenze von 450 °C, insbesondere 300 °C.

Alternativ oder bevorzugt zusätzlich dazu kann der Grundkörper 10 auf eine Temperatur erhitzt werden, die ausgewählt ist aus einem Bereich mit einer unteren Grenze von 200 °C, insbesondere 250 °C, und einer oberen Grenze von 600 °C, insbesondere500 °C. Beispielsweise kann die Temperatur des Grundkörpers 10 zwischen 300 °C und 600 °C betragen, wenn dieser aus einem Stahl besteht, oder zwischen 200 °C und 250°C, wenn dieser aus Aluminium oder einer Aluminiumlegierung, wie z.B. Aludur (Aluminiumlegierung mit Si, Mn und Mg), Aluman (Aluminiumlegierung mit 1,1 Gew.-% Mn), Duraluminium (Aluminiumlegierung mit 2,5 Gew.-% bis 5,5 Gew.-% Cu, 0,2 Gew.-% bis 5 Gew.-% Mg), besteht.

Der Grundkörper 10 wird über eine Zeitspanne in dem Salzbad belassen, die zwischen 5 Minuten, insbesondere 10 Minuten, und 40 Minuten, insbesondere 20 Minuten, liegt.

Danach wird der Grundkörper 10 wieder aus dem Salzbad entfernt, wobei überschüssige flüssige Salzbadanteile durch Ablaufen lassen entfernt werden. Der Grundkörper wird danach an Luft auf Raumtemperatur, d.h. Umgebungstemperatur, oder unter Schutzgasatmosphäre (N2 und/oder He, etc.), oder im Ölbad abgekühlt.

Der nun salzbadgehärtete Grundkörper 10 weist nun eine oder zwei salzbadgehärtete Reibfläche(n) 13 auf, die zumindest teilweise, bevorzugt jedoch zur Gänze, oxidiert sind, wobei mehrere unterschiedliche Oxide an der Oberfläche 11 und/oder 12 des Grundkörpers 10 jeweils in diskreten Bereichen ausgebildet sind. Dazu zeigen die Fig. 2 bis 3 jeweils Ausschnitte in unterschiedlicher Vergrößerung einer Reibfläche 13 einer Stahl-Gegenlamelle die in einem aus Nitraten bestehenden Salzbad bei einer Temperatur von 200 °C für eine Zeit von 10 Minuten gehärtet wurde.

Es ist aus diesen Figuren deutlich zu sehen, dass die gebildeten Oxide, insbesondere Fe₂O₃, NaOH, K₂O, KOH, K₂CO₃, jeweils in eigenen diskreten Bereichen 14 vorhanden sind, wobei diese Bereich aus jeweils einem einzelnem Oxid oder Mischoxid bestehen, also die verschiedenen Oxide auf der Oberfläche 11, 12 des Grundkörpers 10 jeweils nebeneinander ausgebildet sind, wobei mit dem Begriff "nebeneinander" nicht "benachbart" gemeint ist. Diese diskreten Bereiche 14 weisen einen maximalen Durchmesser in Draufsicht auf, der ausgewählt ist aus einem Bereich mit einer unteren Grenze von 50 µm, insbesondere 75 µm, und einer oberen Grenze von 300 µm, insbesondere 200 µm.

Diese Bereiche 14 sind zumindest teilweise kraterförmig ausgebildet, insbesondere mit einer Tiefe der Krater zwischen 2 µm, insbesondere 5 µm, und 20 µm, insbesondere 10 µm.

Die Oxide können auch zumindest teilweise in mehreren Schichten angeordnet sein, beispielsweise mit einer Anzahl zwischen ein und vier Lagen. Eingestellt kann dies durch die Temperatur des Salzbades, die Temperatur des Grundkörpers 10, mit der dieser in das Salzbad gelangt, sowie durch die Verweildauer des Grundkörpers 10 im Salzbad werden.

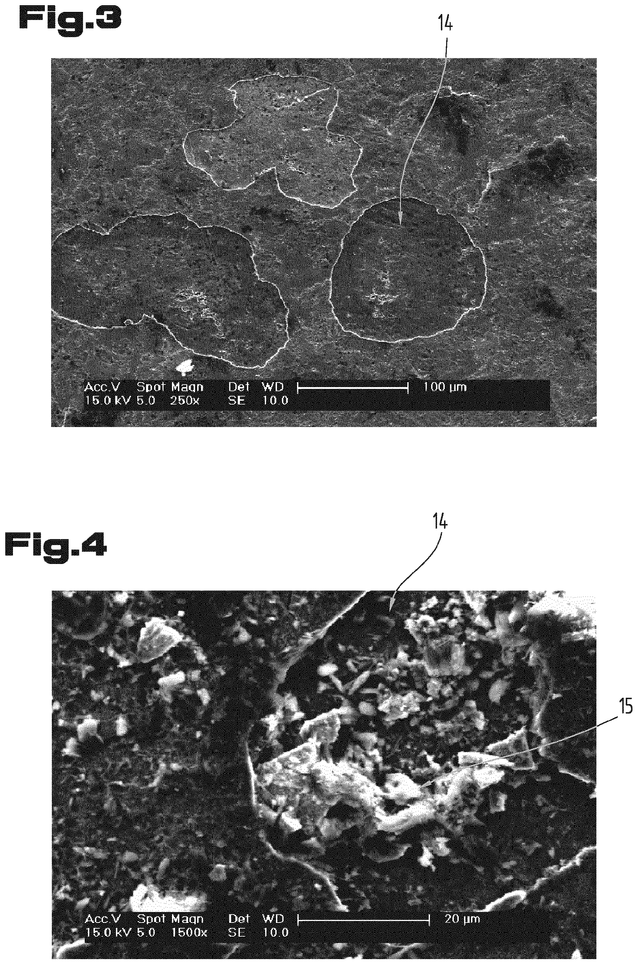

Die salzbadgehärtete(n) Reibfläche(n) 13 weisen zumindest teilweise Salzrückstände 15 aus dem Salzbad auf, wie dies aus Fig. 4 zu ersehen ist, wobei diese Salzrückstände 15 insbesondere innerhalb der (kraterförmigen) diskreten Bereiche 14 angeordnet sind.

Im Folgenden sind einige Beispiele von Reibelementen 3 und Vergleichsbeispiele zusammen mit den entsprechenden Messwerten der Untersuchungen wiedergegeben.

Anhand einer mit EDX (energiedispersive Röntgenspektroskopie) durchgeführten Analyse konnte festgestellt werden, dass an der Reibfläche 13 die Salze NaNO₃, KNO₃ und K₂CO₃ in einer Konzentration von 2 Gew.-% bis 22 Gew.-% NaNO₃, 1 Gew.-% bis 18 Gew.-% KNO₃ und 1 Gew.-% bis 2 Gew.-% K₂CO₃ zu finden sind. Der Grundkörper 10, d.h. dessen Reibflächen 13, ist schwarz gefärbt bzw. weist eine schwärzliche Färbung auf.

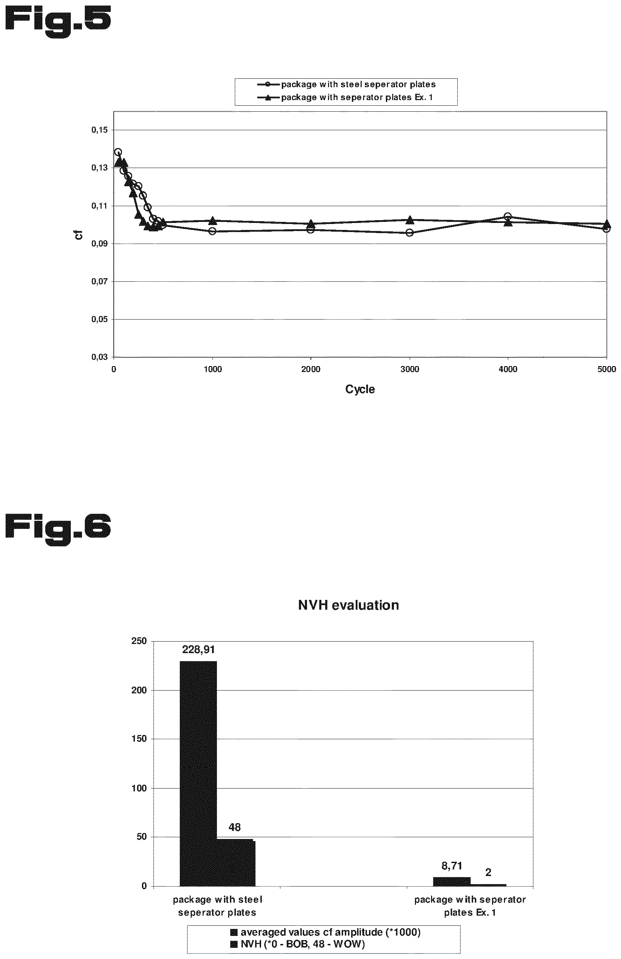

In den Fig. 5 bis 7 sind verschiedene Diagramme zu Kennwerten eines erfindungsgemäßen Reibelementes 3 aus Stahl, hergestellt unter Verwendung eines Salzbades gemäß Beispiel 1 im Vergleich zu einer Gegenlamelle aus Stahl nach dem Stand der Technik dargestellt. Diese Gegenlamellen wurden jeweils in einer Reibbaugruppe mit einer gleichen Reiblamelle nach dem Stand der Technik getestet.

Fig. 5 zeigt das Reibverhalten des erfindungsgemäßen Reibelementes 3 sowie der Gegenlamelle nach dem Stand der Technik über die Zeit, d.h. die Anzahl der Schaltzyklen, die auf der Abszisse aufgetragen sind. Auf der Ordinate ist der Reibungskoeffizient cf aufgetragen. Es ist ersichtlich, dass das erfindungsgemäße Reibelement 3 (Dreiecke) vergleichbare Werte zur Gegenlamelle nach dem Stand der Technik liefert, wobei allerdings über die Anzahl der Schaltzyklen betrachtet das erfindungsgemäße Reibelement 3 nach einer Einlaufphase einen konstanteren Verlauf des Reibungskoeffizienten aufweist. Die Messungen wurden nachdem es keine standardisierten Prüfmethoden gibt, bei die folgenden Prüfbedingungen durchgeführt: p spez.[N/mm²] 3-9, v [m/s] 0,18 - 0,45, theoretisches Reibmoment [Nm] 200 - 1000.

Fig. 6 zeigt ein Diagramm zum NVH Verhalten (Geräusch-, Schwingungs- und Vibrationsverhalten) des erfindungsgemäßen Reibelementes 3 sowie der Gegenlamelle nach dem Stand der Technik. Dargestellt ist die Schwingungsintensität des Reibmoments (averaged values cf amplitude). Zur NVH-Beurteilung wurde bei jeder Druckstufe ein Geräuschpunkt vergeben (max. 2), wenn der Ausschlag der cf-Amplitude größer als 0,025 ist. Es ist deutlich erkennbar, dass bei diesem Test das erfindungsgemäße Reibelemente 3 (rechte Balken) deutlich besser abschnitt, als die Gegenlamelle nach dem Stand der Technik.

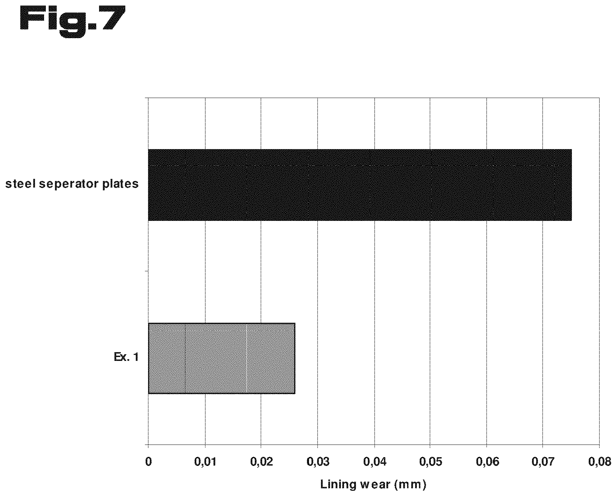

Die in Fig. 7 dargestellte Abriebbeständigkeit (Verschleiß) wurde durch Wandstärkenmessung einer mit der Gegenlamelle verwendeten Reiblamelle vor und nach dem Prüflauf ermittelt, da sich die erfindungsgemäße Gegenlamelle positiv auf die Abriebbeständigkeit des Reiblamelle auswirkt. Dabei auf der Abszisse der Abrieb in [mm] aufgetragen. Wie deutlich zu erkennen ist, weist die mit der erfindungsgemäßen Gegenlamelle, d.h. dem Reibelement 3, eingesetzte Reiblamelle (unterer Balken) unter gleichen Bedingungen einen deutlich geringeren Abrieb auf, als eine Reiblamelle derselben Zusammensetzung, die mit einer Gegenlamelle nach dem Stand der Technik betrieben wurde (oberer Balken).

Die Ausführungsbeispiele zeigen mögliche Ausführungsvarianten der Reibbaugruppe 1 bzw. des Reibelementes 3.

Der Ordnung halber sei abschließend darauf hingewiesen, dass zum besseren Verständnis des Aufbaus der Reibbaugruppe 1 bzw. des Reibelementes 3 diese bzw. deren Bestandteile teilweise unmaßstäblich und/oder vergrößert und/oder verkleinert dargestellt wurden.

### Bezugszeichenaufstellung

- 1: Reibbaugruppe
- 2: Reibelement
- 3: Reibelement
- 4: Welle
- 5: Zapfen

- 6: Trägerelement
- 7: Oberfläche
- 8: Oberfläche
- 9: Reibbelag 10 Grundkörper

- 11: Oberfläche
- 12: Oberfläche
- 13: Reibfläche
- 14: Bereich
- 15: Salzrückstand

## Patentansprüche

1. Reibelement (3) umfassend einen metallischen Grundkörper (10), der mehrere Oberflächen (11, 12) aufweist, wobei zumindest eine der Oberflächen (11, 12) zumindest teilweise in einem Salzbad, das zumindest ein Salz einer anorganischen Säure enthält, salzbadgehärtet ist, wobei die salzbadgehärtete Oberfläche (11, 12) zumindest teilweise oxidiert ist, wobei mehrere unterschiedliche Oxide an der Oberfläche (11, 12) jeweils in diskreten, zumindest teilweise kraterförmigen Bereichen (14) ausgebildet sind, **dadurch gekennzeichnet, dass** die kraterförmigen Bereiche (14) einen maximalen Durchmesser in Draufsicht aufweisen, der ausgewählt ist aus einem Bereich mit einer unteren Grenze von 50 µm und einer oberen Grenze von 300 µm, und dass die salzbadgehärtete Oberfläche (11, 12) Salzrückstände (15) aus dem Salzbad aufweist.

2. Reibelement (3) nach Anspruch 1, **dadurch gekennzeichnet, dass** die Oxide zumindest teilweise in mehreren Schichten angeordnet sind.

3. Reibbaugruppe (1) umfassend zumindest ein erstes Reibelement (2) und zumindest ein zweites Reibelement (3), wobei die beiden Reibelemente in Reibschluss miteinander verbringbar angeordnet sind, **dadurch gekennzeichnet, dass** das zweite Reibelement (3) durch ein Reibelement (3) nach Anspruch 1 oder 2 gebildet ist.

4. Verwendung eines salzbadgehärteten Reibelementes (3) entsprechend Anspruch 1 oder 2 als Gegenlamelle in einer nasslaufenden Reibbaugruppe (1) mit zumindest einem weiteren Reibelement (2), wobei das weitere Reibelement (2) einen organischen Reibbelag (9) auf einem Trägerelement (6) aufweist.

5. Verwendung des Reibelementes (3) nach Anspruch 4 in einer Motorradkupplung.

## Claims

1. A friction element (3) comprising a metallic base body (10) which exhibits a plurality of surfaces (11, 12), wherein at least one of the surfaces (11, 12) is salt-bath-hardened at least in part in a salt bath which contains at least one salt of an inorganic acid, wherein the salt-bath-hardened surface (11, 12) is at least partially oxidized, wherein a plurality of different oxides are formed on the surface (11, 12) in discrete, at least partially crater-shaped regions (14) in each case, **characterized in that** the crater-shaped regions (14) have a maximum diameter in plan view which is selected from a region with a lower limit of 50 µm and an upper limit of 300 µm and that the salt-bath-hardened surface (11, 12) exhibits salt residues (15) from the salt bath.

2. The friction element (3) according to claim 1, **characterized in that** the oxides are arranged at least partially in a plurality of layers.

3. A friction subassembly (1) comprising at least a first friction element (2) and at least a second friction element (3), wherein the two friction elements are arranged such that they can be brought into a frictional connection, **characterized in that** the second friction element (3) is created by a friction element (3) according to claim 1 or 2.

4. Use of a salt-bath-hardened friction element (3) according to claim 1 or 2 as a counterplate in a wet friction assembly (1) with at least one further friction element (2), wherein the further friction element (2) has an organic friction lining (9) on a carrier element (6).

5. Use of the friction element (3) according to claim 4 in a motorcycle clutch.

## Revendications

1. Élément de friction (3) comprenant un corps de base métallique (10), qui comprend plusieurs surfaces (11, 12), au moins une des surfaces (11, 12) étant trempé dans un bain de sel au moins partiellement dans un bain de sel qui contient au moins un sel d'un acide inorganique, la surface trempée par bain de sel (11, 12) étant au moins partiellement oxydée, plusieurs oxydes différents sur la surface (11, 12) étant conçus chacun sur des zones (14) discrètes, au moins partiellement en forme de cratères, **caractérisé en ce que** les zones en forme de cratères (14) présentent un diamètre maximal en vue de dessus, qui est sélectionné dans un intervalle avec une limite inférieure de 50 µm et une limite supérieure de 300 µm et **en ce que** la surface trempée par bain de sel (11, 12) comprend des résidus de sel (15) provenant du bain de sel.

2. Élément de friction (3) selon la revendication 1, **caractérisé en ce que** les oxydes sont disposés au moins partiellement dans plusieurs couches.

3. Sous-ensemble de friction (1) comprenant au moins un premier élément de friction (2) et au moins un deuxième élément de friction (3), les deux éléments de friction étant disposés de façon à pouvoir être reliés par friction entre eux, **caractérisé en ce que** le deuxième élément de friction (3) est constitué d'un élément de friction (3) selon la revendication 1 ou 2.

4. Utilisation d'un élément de friction trempé par bain de sel (3) selon la revendication 1 ou la revendication 2 en tant que contre-lamelle, dans un sous-ensemble de friction par voie humide (1) avec au moins un autre élément de friction (2), l'autre élément de friction (2) comprenant une garniture de friction organique (9) sur un élément de support (6).

5. Utilisation de l'élément de friction (3) selon la revendication 4, dans un embrayage de moto.
